# EUROPEAN PATENT APPLICATION

(11) **EP 4 089 830 A1**
(43) Date of publication of application: **16.11.2022**
(21) Application number: 21185468.2
(22) Date of filing: 14.07.2021
(51) Int. Cl.: H01M 50/584, H01M 50/103, H01M 50/176, H01M 50/224, H01M 50/202

(54) **BATTERY, BATTERY MODULE, AND BATTERY PACK**

(30) Priority: 14.05.2021 CN 202121048064 U
(71) Applicant: CALB Co., Ltd., Changzhou City, Jiangsu Province (CN)
(72) Inventor: Pan, Fangfang, Changzhou City (CN); Xu, Jiuling, Changzhou City (CN); Qi, Binwei, Luoyang City (CN); Zhang, Yongjie, Luoyang City (CN)
(74) Representative: Becker, Eberhard

(57) **Abstract**

A battery, a battery module, and a battery pack are provided. The battery includes a cell (10) and a casing (20). The casing (20) accommodates the cell. The cell (10) includes a cell body (11), a first insulating film (12) and a second insulating film (13). The first insulating film (12) is disposed on a surface of the cell body (11) and covers a part of the surface of the cell body (11). The second insulating film (13) is disposed to be independent from the first insulating film (12) and is partially adhered to a surface of the first insulating film (12) away from the cell body (11), and is partially adhered to the surface of the cell body (11) that is not covered by the first insulation film. The first insulating film (12) is fixed firmly to the cell body (11).

## Description

### BACKGROUND

### Technical Field

The disclosure relates to a battery technology, particularly to a battery, a battery module, and a battery pack.

### Description of Related Art

Among the related technologies, an insulating film is disposed between the battery cell and the casing to prevent the cell and the casing from being electrically connected. As the insulation film and the cell are not fixed and may easily fall off, the cell may be partially exposed, conducting the cell and the casing which brings the risk of short circuit. In addition, since the casing generally adopts aluminum or aluminum alloy materials, when the negative electrode of the cell is connected to the casing, the potential of the casing is close to the negative electrode potential, and the casing corrodes when charging the battery.

### SUMMARY

The present disclosure provides a battery, a battery module and a battery pack.

According to the first aspect of the present disclosure, a battery is provided, which includes a cell and a casing. The casing accommodates the cell, and the cell includes a cell body, a first insulating film and a second insulating film. The first insulating film is disposed on a surface of the cell body and covers a part of the surface of the cell body. The second insulating film is disposed to be independent from the first insulating film, is partially adhered to a surface of the first insulating film away from the cell body, and is partially adhered to the surface of the cell body not covered by the first insulating film.

According to the second aspect of the present disclosure, a battery module including the above-mentioned battery is provided.

According to the third aspect of the present disclosure, a battery pack including the above-mentioned battery is provided.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a sectional diagram of a structure of a cell of a battery according to an exemplary embodiment.
FIG. 2 is an exploded schematic diagram of a structure of a battery according to an exemplary embodiment.
FIG. 3 is a partially exploded schematic diagram of a structure of a battery according to an exemplary embodiment.
FIG. 4 is a schematic diagram of a partial structure of a battery according to an exemplary embodiment.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

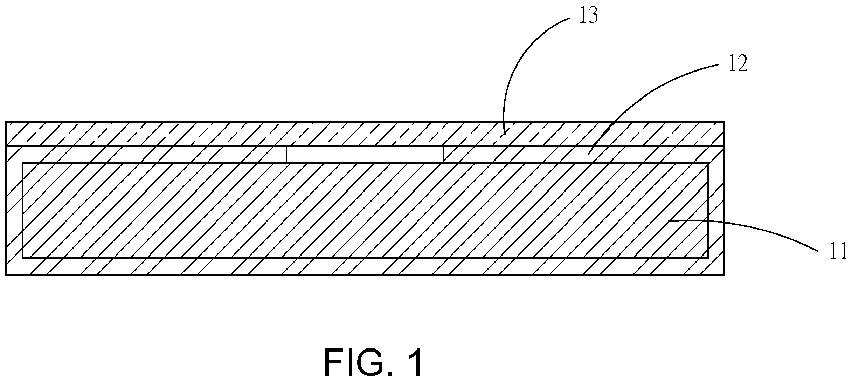

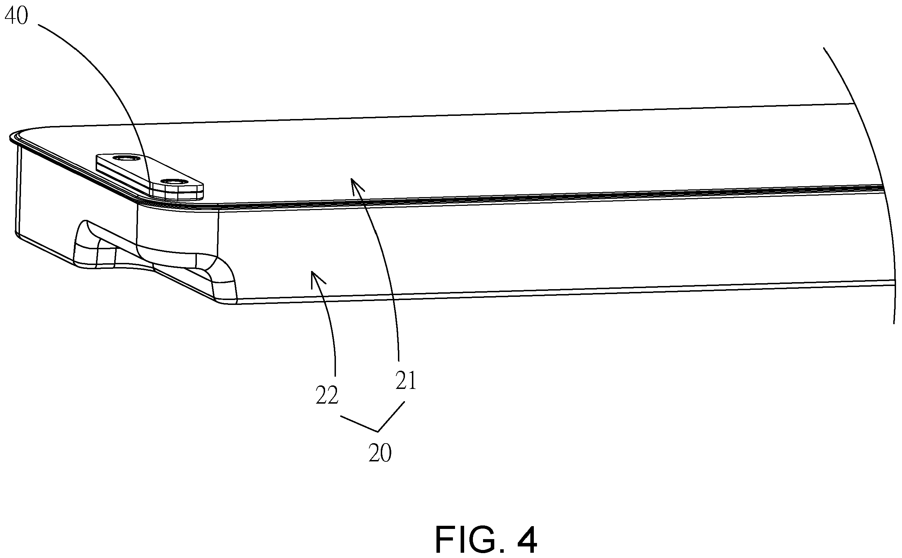

As shown in FIG. 1 to FIG. 4, an embodiment of the present disclosure provides a battery, including a cell 10 and a casing 20. The cell 10 includes a cell body 11, a first insulating film 12, and a second insulating film 13. The first insulating film 12 is disposed on a surface of the cell body 11 and covers a part of the surface of the cell body 11. The second insulating film 13 is provided to be independent from the first insulating film 12, and the second insulating film 13 is partially adhered to a surface of the first insulating film 12 away from the cell body 11, while the second insulating film 13 is also partially adhered to the surface of the cell body 11 that is not covered by the first insulating film 12.

The battery of this embodiment includes the cell 10 and the casing 20. The cell 10 includes the cell body 11, the first insulating film 12, and the second insulating film 13. The first insulating film 12 is provided on the cell body 11 to prevent the cell 10 and the casing 20 from being electrically connected. The cell body 11 is further independently provided with the second insulating film 13. A part of the second insulating film 13 is adhered to the first insulating film 12, and a part of the second insulating film 13 is adhered to the cell body 11, such that the first insulating film 12 is firmly fixed to the cell body 11, so as to prevent a relative displacement between the first insulating film 12 and the cell body 11, and thereby preventing the direct contact between the cell body 11 and the casing 20 after the cell body 11 is exposed.

Optionally, in this embodiment, the first insulating film 12 is an insulating film without an adhesive layer, that is, the first insulating film 12 is in contact with the surface of the cell body 11 but is not adhered to the surface of the cell body 11.

Optionally, in this embodiment, the surface where the first insulating film 12 and the cell body 11 are in contact is provided with a first adhesive layer, and the first insulating film 12 is adhered to the surface of the cell body 11 through the first adhesive layer.

Optionally, in this embodiment, at least a part of the surface where the second insulating film 13 and the first insulating film 12 are in contact is provided with a second adhesive layer, and the second insulating film 13 is adhered by the second adhesive layer and the first insulating film 12. A third adhesive layer is provided on the surface where the second insulating film 13 and the cell body 11 are in contact, and the second insulating film 13 is adhered to the cell body 11 through the third adhesive layer.

Furthermore, in this embodiment, the first adhesive layer, the second adhesive layer, and the third adhesive layer are adhesive layers with the same bond strength.

Optionally, in this embodiment, the second adhesive layer and the third adhesive layer are adhesive layers with the same bond strength, and the first adhesive layer has lower bond strength than the second adhesive layer and the third adhesive layer. The first insulating film 12 is adhered to the surface of the cell body 11 through the first adhesive layer having low bond strength. When there are defects in the adhesion of the first insulating film 12, it is convenient to correct and replace the first insulating film 12. Due to the low bond strength of the first adhesive layer, it will not cause damage to the cell body 11.

Optionally, in this embodiment, the second insulating film 13 is an adhesive tape, and an adhesive layer is provided on the side of the adhesive tape close to the cell body 11.

Optionally, in this embodiment, the cell 10 includes one or at least two sub-cells. For example, the cell may include one sub-cell, two sub-cells, three sub-cells, four sub-cells, and so on. The sub-cell includes a first pole piece, a second pole piece having electrical property opposite to that of the first pole piece, and a diaphragm disposed between the first pole piece and the second pole piece.

In one embodiment, the sub-cell is a laminated cell, which has a first pole piece, a diaphragm piece, and a second pole piece that are sequentially stacked. The second pole piece has an electrical property opposite to that of the first pole piece. Multiple pairs of the first pole piece and the second pole piece are stacked to form the laminated cell.

In one embodiment, the sub-cell is a wound cell. The first pole piece, the second pole piece having electrical property opposite to that of the first pole piece, and the diaphragm piece disposed between the first pole piece and the second pole piece are wound to form the wound cell.

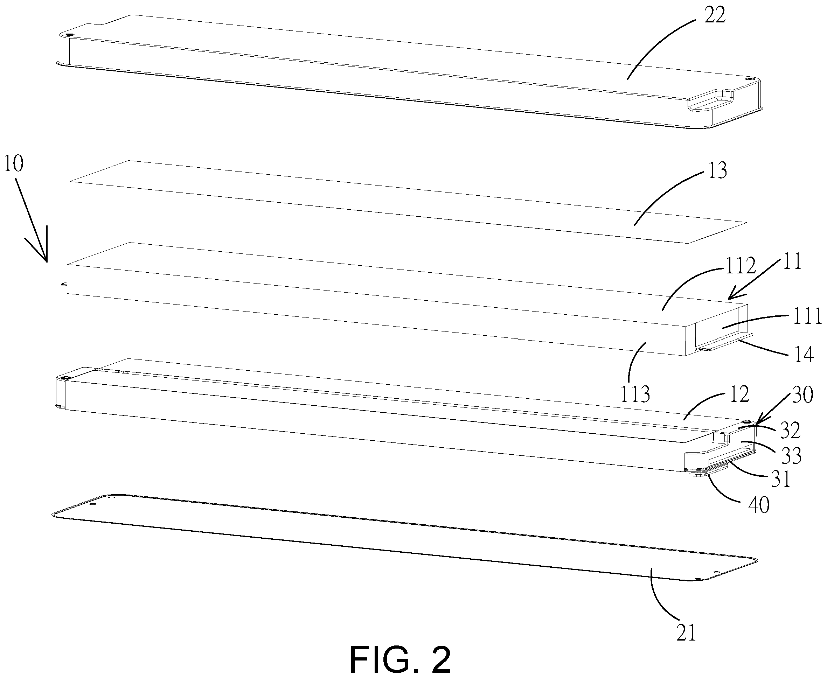

Furthermore, as shown in FIG. 2, the cell body 11 is substantially a cuboid, and the cell body 11 includes two first side surfaces 111, two second side surfaces 112, and two third side surfaces 113 which are respectively disposed opposite to each other. The first side surfaces 111, the second side surfaces 112, and the third side surfaces 113 are substantially perpendicular to each other. The cell 10 further includes a tab 14 extending from at least one of the first side surfaces 111 of the cell body 11. The first insulating film 12 at least partially covers one of the second side surfaces 112 of the cell body 11, and the second insulating film 13 covers where the two second side surfaces 112 and the two third side surfaces 113 of the cell body 11 that are not covered by the first insulating film 12.

It is noted that, the cell body 11 of the battery in this embodiment is a substantially cuboid, the tab 14 extends from at least one of the first side surfaces 111 of the cell body, and the first insulating film 12 and the second insulating film 13 provided on the cell body 11 cover the second side surface 112 and the third side surface 112 of the cell body. In this way, the insulating film may avoid the tab 14, and the tab 14 may extend and protrude from the cell body 11 to be electrically connected to the external components of the battery through a pole 40 provided on the casing 20 of the battery. The insulating film covers the two second side surfaces 112 and the two third side surfaces 113 that are substantially perpendicular to the first side surface 111 where the tab 14 is located on the cell body 11, so as to prevent the electrical connection between the cell body 11 and the casing 20 of the battery to the greatest extent to avoid the battery short circuit. When the casing 20 is made of aluminum metal or alloy, the negative pole piece of the cell body 11 and the casing 20 are prevented from having a short-circuit, thereby preventing the casing 20 from corrosion.

Furthermore, in this embodiment, the tabs 14 of the cell 10 include a positive tab and a negative tab.

In one embodiment, the positive electrode tab and the negative electrode tab of the cell 10 respectively extend from the same first side surface 111 of the cell body 11, and the positive electrode tab and the negative electrode tab do not overlap each other, providing a simple assembly of the battery.

In one embodiment, the positive electrode tab and the negative electrode tab of the cell 10 respectively extend from two opposite first side surfaces 111 of the cell body 11, that is, the positive electrode tab extends from one of the first side surfaces 111, and the negative electrode tab extends from the other one of the first side surfaces 111.

Optionally, in this embodiment, the positive electrode tab and the negative electrode tab are full tabs, that is, the width of the tabs and the width of the pole piece remain the same, such that it does not require cutting, which keeps the process simple and improves the flow capacity of the tab at the same time, reducing the internal resistance of the battery, and improving the fast charging performance of the battery.

Optionally, in this embodiment, the width of the positive electrode tab and the negative electrode tab is smaller than the width of the pole piece, that is, part of the tab is cut off to reduce the weight of inactive materials and increase the energy density of the battery.

In one embodiment, the first insulating film 12 covers the second side surface 112 and the third side surface 113 at the same time, that is, the first insulating film covers the junction where the second side surface 112 and the third side surface 113 meet, which further improves the safety of the battery.

In one embodiment, the first insulating film 12 covers all of one of the second side surfaces 112 of the cell body 11 and partially covers two third side surfaces 113 of the cell body 11 that are opposite to each other. The second insulating film 13 covers where the two second side surfaces 112 and the two third side surfaces 113 of the cell body 11 that are not covered by the first insulating film 12, that is, the second insulating film 13 covers all of the other one of the second side surfaces 112 of the cell body 11 and partially covers the two opposite third side surfaces 113 of the cell body 11. The first insulating film 12 and the second insulating film 13 are partially overlapped on two opposite third side surfaces 113 of the cell body 11 and are adhered together.

In one embodiment, the first insulating film 12 covers all of one of the second side surfaces 112 of the cell body 11 and covers all of the two opposite third side surfaces 113 of the cell body 11. The second insulating film 13 covers all of the other one of the second side surfaces 112 of the cell body 11 and covers all of the two opposite third side surfaces 113 of the cell body 11. The first insulating film 12 and the second insulating film 13 are completely overlapped on the two opposite third side surfaces 113. Such configuration ensures that the second side surfaces 112 and the third side surfaces 113 of the cell covered by the insulating films are all flat surfaces, which can prevent protrusion due to overlapping parts of the two insulating films, thereby affecting the cell performance.

Optionally, in this embodiment, the cell 10 is a laminated cell. The second side surfaces 112 of the cell body 11 are surfaces parallel to the surface of the pole piece, and the third side surfaces 113 of the cell body 11 are the planes having the thickness of the pole piece after being stacked. On the third side surfaces 113 having the thickness stacked by the pole piece, burrs may remain on the edge of the pole piece during the preparation of the pole piece, and burrs of the pole piece may pierce the first insulating film and be electrically connected to the casing 20. However, in this embodiment, two insulating films are provided on the third side surface 113 of the cell body 11 to provide double-layer protection and prevent burrs on the edge of the pole pieces from piercing the insulating film and conducting with the casing 20.

Optionally, in this embodiment, the cell 10 is a laminated cell, where the third side surfaces 113 of the cell body 11 are surfaces parallel to the surface of the pole piece, and the second side surfaces 112 of the cell body 11 are the planes having the thickness of the pole piece after being stacked. The plane parallel to the pole pieces is the third side surface 113. In this way, as the cell body expands and deforms toward the third side surfaces 113 during the charging process, when there is dust or metal foreign matter on the surfaces of the third side surfaces 113 of the cell body, the cell body 11 squeezes the foreign matter during the expansion, so that the foreign matter pierces the first insulating film 12 and makes the cell body 11 and the casing 20 electrically connected. However, in this embodiment, two insulating films are provided on the third side surface 113 of the cell body 11 to provide a double-layer protection and prevent foreign matter from piercing the insulating film during the charging and expansion process of the cell that makes the cell body 11 and the casing 20 electrically connected.

In an embodiment, the first insulating film 12 covers all of one of the second side surfaces 112 and all of the two third side surfaces 113 of the cell body 11, and the first insulating film 12 covers part of the other one of the second side surfaces 112 of the cell body 11. The part where the other one of the second side surfaces 112 of the cell body 11 that is not covered by the first insulating film 12 is a first area, and the second insulating film 13 covers the first area.

Optionally, the first area on the other one of the second side surfaces 112 may be square, polygonal, circular, irregular, etc., that is, the first insulating film 12 is provided with an opening in a corresponding shape on the other one of the second side surfaces 112, and the opening may be a through hole, a gap, or the like.

Furthermore, in this embodiment, the first insulating film 12 covers all of one of the second side surfaces 112 and all of the two third side surfaces 113 of the cell body 11, both ends of the first insulating film 12 are disposed on the other one of the second side surfaces 112 of the cell body 11, and the two ends of the first insulating film 12 are disposed opposite to each other to form a gap, as shown in FIG. 1. The second insulating film 13 shown in FIG. 1 is not attached to the cell body 11, but the actual structure needs to make the second insulating film 13 adhere to the cell body 11 by, for example, connecting them by adding an additional adhesive layer, or the second insulating film 13 is made directly adhere to the cell body 11, which is not limited here.

Optionally, in this embodiment, the two ends of the first insulating film 12 are disposed in parallel, that is, the first area is a rectangle, and a pair of opposite sides of the rectangle overlap with the projections of the two end faces of the first insulating film 12 on the second side surface, the other pair of opposite sides of the rectangle respectively overlap with the sides where the other one of the second side surfaces 112 and the two first side surfaces 111 meet. The second insulating film 13 covers the first area and partially overlaps both ends of the first insulating film 12.

In an embodiment, the first insulating film 12 covers all of one of the second side surfaces 112 and all of the two third side surfaces 113 of the cell body 11, and the first insulating film 12 covers part of the other one of the second side surfaces 112 of the cell body 11. The part where the other one of the second side surfaces 112 of the cell body 11 is not covered by the first insulating film 12 is the first area, the second insulating film 13 contacts and adheres to the cell body 11 in the first area, and the second insulating film 13 covers all of the other one of the second side surfaces 112 of the cell body 11.

Furthermore, in this embodiment, the first insulating film 12 covers all of one of the second side surfaces 112 and all of the two third side surfaces 113 of the cell body 11, both ends of the first insulating film 12 are disposed on the other one of the second side surfaces 112 of the cell body 11, and the two ends of the first insulating film 12 are disposed opposite to each other to form a gap.

Optionally, in this embodiment, the two ends of the first insulating film 12 are disposed in parallel, that is, the first area is a rectangle, and a pair of opposite sides of the rectangle overlap with the projections of the two end faces of the first insulating film 12 on the second side surface, the other pair of opposite sides of the rectangle respectively overlap with the sides where the other one of the second side surfaces 112 and the two first side surfaces 111 meet. The second insulating film 13 covers all of the other one of the second side surfaces 112 of the cell body 11 and contacts and adheres to the cell body 11 through the first area.

Optionally, in this embodiment, a distance between the two end surfaces of the first insulating film 12 is s, a width of the cell body 11 is t, and 0<s≦2t/3. When the distance is greater than 2t/3, the part where the first insulating film 12 and the second insulating film 13 overlap on the other one of the second side surfaces 112 is less. Since the overlapping part has sharp protrusion, when hot press is performed to form the cell 10, hot pressing the sharp protrusions risks damaging the cell.

Optionally, in this embodiment, the cell 10 is a laminated cell, and the second side surfaces 112 of the cell body 11 are surfaces parallel to the surface of the pole piece. During the charging process of the cell, the cell body expands and deforms toward the second side surfaces 112. When there is dust or metal foreign matter on the surfaces of the second side surfaces 112 of the cell body, the cell body 11 squeezes the foreign matter during the expansion, so that the foreign matter pierces the first insulating film 12 and makes the cell body 11 and the casing 20 electrically connected. However, in this embodiment, two insulating films are provided on the second side surfaces 112 of the cell body 11 to provide a double-layer protection and prevent foreign matter from piercing the insulating film during the charging and expansion process of the cell that makes the cell body 11 and the casing 20 electrically connected.

Optionally, in this embodiment, the cell 10 is a laminated cell, and the second side surfaces 112 of the cell body 11 are the planes having the thickness of the pole piece after being stacked. On the second side surfaces 112 having the thickness stacked by the pole piece, burrs may remain on the edge of the pole piece during the preparation of the pole piece, and burrs of the pole piece may pierce the first insulating film and be electrically connected to the casing 20. However, in this embodiment, two insulating films are provided on the second side surface 112 of the cell body 11 to provide double-layer protection and prevent burrs on the edge of the pole pieces from piercing the insulating film and conducting with the casing 20.

In one embodiment, the positive electrode tab and the negative electrode tab of the cell 10 respectively extend from two opposite first side surfaces 111 of the cell body 11, that is, the positive electrode tab extends from one of the first side surfaces 111 and the negative electrode tab extends from the other one of the first side surfaces 111. And part of the first insulating film 12 covers the two first side surfaces 111 respectively, which reduces the risk of electrical connection between the first side surface and the casing 20.

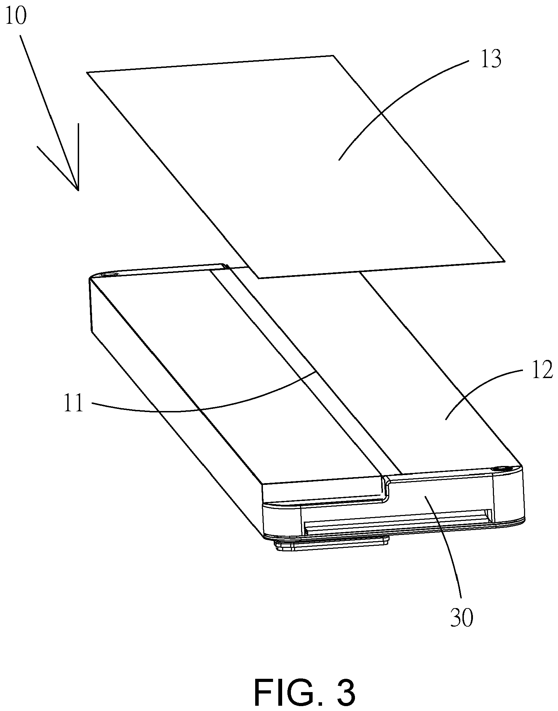

As shown in FIG. 2 and FIG. 3, in some embodiments of the present disclosure, the battery further includes a bracket 30, which is disposed between the first side surface 111 of the cell 10 and the casing 20. The first insulating film 12 has a part covering the bracket 30.

Optionally, in this embodiment, parts of both the first insulating film 12 and the second insulating film 13 cover the bracket 30.

Optionally, in this embodiment, the first insulating film 12 and the second insulating film 13 cover the space between the cell 10 and the bracket 30.

It should be noted that, the bracket 30 is disposed between the cell 10 and the casing 20 to fix the cell 10, to prevent the cell 10 from shaking in the casing 20. The bracket is made of insulating materials, which also prevent the cell 10 and the casing 20 from being electrically connected. Parts of the first insulating film 12 and the second insulating film 13 cover the bracket 30, which reduces the risk of short circuit between the cell 10 and the casing 20. The first insulating film 12 and the second insulating film 13 cover the space between the cell 10 and the bracket 30, which prevents the cell 10 from being connected to the casing 20 through the gap, further reducing the risk of having a short circuit between the two.

In some embodiments of the present disclosure, the bracket 30 supports and is disposed between two opposite surfaces of the casing 20, and the number of the bracket 30 is two, which are respectively located between the casing 20 and the two first side surfaces 111. The cell body 11 is located between the two brackets 30. The two brackets 30 stably fix the cell body 11 in the casing 20. The brackets 30 support and are disposed between the two opposite surfaces of the casing 20. In a specific embodiment, part of the surface of the bracket 30 abuts against two opposite large surfaces of the casing 20 and has a good supporting effect on the large surface of the casing 20, maintaining the stability of the large surface.

As shown in FIG. 2, in some embodiments of the present disclosure, the bracket 30 further includes a first connecting plate 31 and a second connecting plate 32, and the second connecting plate 32 is disposed opposite to the first connecting plate 31. A side plate 33 is connected to a side of the first connecting plate 31 and the second connecting plate 32 and is located between the first connecting plate 31 and the second connecting plate 32. The shape of the side plate 33 may be designed according to the side shapes of the first connecting plate 31 and the second connecting plate 32. Part of the surface of the first connecting plate 31 abuts against a first casing element 21 of the casing 20, and part of the surface of the second connecting plate 32 abuts against a second casing element 22 of the casing to have a stable support for the large surface of the casing 20. Part of the first insulating film 12 covers the first connecting plate 31 and the second connecting plate 32. In a specific embodiment, the first insulating film 12 and the first connecting plate or the second connecting plate of the bracket 30 are welded and fixed to prevent the first insulating film 12 from moving or falling off.

In some embodiments of the present disclosure, the first insulating film 12 and the second insulating film 13 are provided with creases at the parts where they bend, which facilitates the assembly of the insulating films on the cell body 11, saving time and effort.

In one embodiment, the casing 20 has a length direction and a width direction, and both the length direction and the width direction are linear directions. The length direction is the longer extension direction of the cell body 11 and the casing 20, and the width direction is the shorter extension direction of the casing 20.

In one embodiment, the length of the battery is a, 400mm≤a≤2500mm, the width of the battery is b, and the height of the battery is c, 2b≤a≤SOb, and/or 0.5c≤b≤20c.

Furthermore, 50mm≤b≤200mm, 10mm≤c≤100mm.

Preferably, 4b≤a≤25b, and/or, 2c≤b≤10c.

In the battery in the above embodiment, under the condition that sufficient energy density is ensured, the ratio of the length to the width of the battery is larger, and furthermore, the ratio of the width to the height of the battery is larger.

In one embodiment, the length of the battery is a, and the width of the battery is b, 4b≤a≤7b, that is, the ratio of the length to the width of the battery in this embodiment is larger, so as to increase the energy density of the battery and facilitate the subsequent formation of a battery module.

In one embodiment, the height of the battery is c, 3c≤b≤7c, and the ratio of the battery width to the height is larger, and as sufficient energy density is ensured, it is also convenient to form the same.

Optionally, the length of the battery is 500mm to 1500mm, the width of the battery is 80mm to 150mm, and the height of the battery is 15mm to 25mm.

It should be noted that, the length of the battery is the dimension of the length direction of the battery, the width of the battery is the dimension of the width direction of the battery, and the height of the battery is the dimension of the height direction of the battery, which is also the thickness of the battery.

An embodiment of the present disclosure also provides a battery module including the battery mentioned above.

The battery of the battery module in an embodiment of the present disclosure includes a cell 10 and a casing 20. The cell 10 includes a cell body 11, a first insulating film 12, and a second insulating film 13. The first insulating film is provided on the cell body 11 to prevent the cell 10 and the casing 20 from being electrically connected, and the second insulating film 13 is also independently provided on the cell body 11. Part of the second insulating film 13 is adhered to the first insulating film 12, and part of the second insulating film 13 is adhered to the cell body 11, such that the first insulating film 12 is firmly fixed to the cell body 11, so as to prevent a relative displacement between the first insulating film 12 and the cell body 11, and thereby preventing the direct contact between the cell body 11 and the casing 20 after the cell body 11 is exposed.

In some embodiments, the battery module includes at least two batteries, and the at least two batteries are disposed in parallel to form the battery module. The cell body 11 of the battery is generally a cuboid, and the cell body 11 includes two first side surfaces 111, two second side surfaces 112, and two third side surfaces 113 that are respectively disposed opposite to each other, and the first side surfaces 111, the second side surfaces 112, and the third side surfaces 113 are substantially perpendicular to each other. The cell 10 further includes a tab 14 extending from at least one of the first side surfaces 111 of the cell body 11. The first insulating film 12 covers all of one of the second side surfaces 112 of the cell body 11 and covers all of the two opposite third side surfaces 113 of the cell body 11. The second insulating film 13 covers all of the other one of the second side surfaces 112 of the cell body 11 and covers all of the two opposite third side surfaces of the cell body 11. The first insulating film 12 and the second insulating film 13 are completely overlapped on the two opposite third side surfaces 113. Such configuration ensures that the second side surfaces 112 and the third side surfaces 113 of the cell covered by the insulating films are all flat, preventing where the two insulating films overlap from bulging that affects the cell performance. When two batteries are disposed in parallel and that it is ensured the second side surfaces 112 of the cell body 11 are disposed opposite to each other, since two insulating films are provided on the third side surfaces, the dimension of the module is not increased in the direction of battery arrangement, which is beneficial to the improvement of the module forming efficiency.

An embodiment of the present disclosure further provides a battery pack, including the battery mentioned above.

The battery of the battery pack of the embodiment of the present disclosure includes a cell 10 including a cell body 11, a first insulating film 12, and a second insulating film 13. The first insulating film is provided on the cell body 11 to prevent the cell 10 and the casing 20 from being electrically connected, and the second insulating film 13 is also independently provided on the cell body 11, where part of the second insulating film 13 is adhered to the first insulating film 12, and part of the second insulating film 13 is adhered to the cell body 11, such that the first insulating film 12 is firmly fixed to the cell body 11, preventing a relative displacement between the first insulating film 12 and the cell body 11, and thereby preventing the direct contact between the cell body 11 and the casing 20 after the cell body 11 is exposed.

In some embodiments, the battery pack includes at least two batteries, and the at least two batteries are disposed in parallel to form a battery pack. The cell body 11 of the battery is generally a cuboid, and the cell body 11 includes two first side surfaces 111, two second side surfaces 112, and two third side surfaces 113 that are respectively disposed opposite to each other, and the first side surfaces 111, the second side surfaces 112, and the third side surfaces 113 are substantially perpendicular to each other. The cell 10 further includes a tab 14 extending from at least one of the first side surfaces 111 of the cell body 11. The first insulating film 12 covers all of one of the second side surfaces 112 of the cell body 11 and covers all of the two opposite third side surfaces 113 of the cell body 11. The second insulating film 13 covers all of the other one of the second side surfaces 112 of the cell body 11 and covers all of the two opposite third side surfaces of the cell body 11. The first insulating film 12 and the second insulating film 13 are completely overlapped on the two opposite third side surfaces 113. Such configuration ensures that the second side surfaces 112 and the third side surfaces 113 of the cell covered by the insulating films are all flat, preventing where the two insulating films overlap from bulging that affects the cell performance. When two batteries are disposed in parallel and that it is ensured the second side surfaces 112 of the cell body 11 are disposed opposite to each other, since two insulating films are provided on the third side surfaces, the dimension of the module is not increased in the direction of battery arrangement, which is beneficial to the improvement of the module forming efficiency.

An embodiment of the present disclosure also provides a battery pack, including the battery module mentioned above.

Optionally, the battery pack includes at least two battery modules, and the battery pack may further include a box body, and the at least two battery modules are disposed in the box body.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative.

## Claims

1. A battery, comprising a cell (10) and a casing (20), the casing (20) accommodating the cell (10), and the cell comprising:
a cell body (11);
a first insulating film (12), disposed on a surface of the cell body (11) and covering a part of the surface of the cell body (11); and
a second insulating film (13), disposed to be independent from the first insulating film (12), wherein the second insulating film (13) is partially adhered to a surface of the first insulating film (12) away from the cell body (11), and partially adhered to the surface of the cell body (11) that is not covered by the first insulating film (12).

2. The battery according to claim 1, wherein:
the cell body (11) comprises two first side surfaces (111), two second side surfaces (112), and two third side surfaces (113) that are respectively opposite to each other;
the cell (10) further comprises a tab (14), and the tab (14) extends from at least one of the first side surfaces (111) of the cell body (11);
the first insulating film (12) at least partially covers one of the second side surfaces (112); and
the second insulating film (13) covers portions of the two second side surfaces (112) and the two third side surfaces (113) that are not covered by the first insulating film (12).

3. The battery according to claim 2, wherein the first insulating film (12) partially covers one of the third side surfaces (113).

4. The battery according to claim 2, wherein the first insulating film (12) partially covers the two third side surfaces (113).

5. The battery according to claim 4, wherein the first insulating film (12) covers all of one of the second side surfaces (112).

6. The battery according to claim 5, wherein:
the first insulating film (12) covers all of the two third side surfaces (113); and
the second insulating film (13) covers all of the other one of the second side surfaces (112), and the second insulating film (13) covers all of the two third side surfaces (113).

7. The battery according to claim 5, wherein:
the first insulating film (12) covers all of the two third side surfaces (113);
the first insulating film (12) partially covers the other one of the second side surfaces (112), and a part of the other one of the second side surfaces (112) is covered by the second insulating film (13).

8. The battery according to claim 7, wherein two ends of the first insulating film (12) are spaced apart from each other on the other one of the second side surfaces (112), and are connected through the second insulating film (13).

9. The battery according to claim 8, wherein a distance between two end faces of the first insulating film (12) is s, a width of the cell body (11) is t, and 0<s≤2t/3.

10. The battery according to claim 7, wherein the second insulating film (13) covers all of the other one of the second side surfaces (112).

11. The battery according to claim 2, wherein the two tabs (14) respectively extend from the two first side surfaces (111), and the first insulating film (12) partially covers the two first side surfaces (111).

12. The battery according to claim 2, further comprising:
a bracket (30), disposed between the first side surfaces (111) and the casing (20),
wherein the first insulating film (12) and/or the second insulating film (13) has a part partially covering the bracket (30).

13. The battery according to any one of claims 2-12, wherein the two second side surfaces (112) are surfaces of the cell body (11) having a largest area.

14. The battery according to any one of claims 1-12, wherein a length of the battery is a, a width of the battery is b, and a height of the battery is c; and 2b≤a≤SOb and/or 0.5c≤b≤20c; 400mm≤a≤2500mm.

15. A battery module, comprising the battery according to any one of claims 1-14.

16. A battery pack, comprising the battery according to any one of claims 1-14.

## Amended claims

### Amended claims in accordance with Rule 137(2) EPC.

1. A battery, comprising a cell (10) and a casing (20), the casing (20) accommodating the cell (10), and the cell comprising:
a cell body (11);
a first insulating film (12), disposed on a surface of the cell body (11) and covering a part of the surface of the cell body (11) through a first adhesive layer, wherein two ends of the first insulating film (12) are disposed opposite to each other to form a gap; and
a second insulating film (13), wherein the second insulating film (13) and the first insulating film (12) are two independent films, the second insulating film (13) is partially adhered to a surface of the first insulating film (12) away from the cell body (11) by a second adhesive layer, and partially adhered to the surface of the cell body (11) that is not covered by the first insulating film (12) through the gap,
wherein the first adhesive layer has lower bond strength than the second adhesive layer.

2. The battery according to claim 1, wherein:
the cell body (11) comprises two first side surfaces (111), two second side surfaces (112), and two third side surfaces (113) that are respectively opposite to each other;
the cell (10) further comprises a tab (14), and the tab (14) extends from at least one of the first side surfaces (111) of the cell body (11);
the first insulating film (12) at least partially covers one of the second side surfaces (112);
and
the second insulating film (13) covers portions of the two second side surfaces (112) and the two third side surfaces (113) that are not covered by the first insulating film (12).

3. The battery according to claim 2, wherein the first insulating film (12) partially covers one of the third side surfaces (113).

4. The battery according to claim 2, wherein the first insulating film (12) partially covers the two third side surfaces (113).

5. The battery according to claim 4, wherein the first insulating film (12) covers all of one of the second side surfaces (112).

6. The battery according to claim 5, wherein:
the first insulating film (12) covers all of the two third side surfaces (113); and
the second insulating film (13) covers all of the other one of the second side surfaces (112), and the second insulating film (13) covers all of the two third side surfaces (113).

7. The battery according to claim 5, wherein:
the first insulating film (12) covers all of the two third side surfaces (113);
the first insulating film (12) partially covers the other one of the second side surfaces (112), and a part of the other one of the second side surfaces (112) is covered by the second insulating film (13).

8. The battery according to claim 7, wherein the two ends of the first insulating film (12) are spaced apart from each other on the other one of the second side surfaces (112), and are connected through the second insulating film (13).

9. The battery according to claim 8, wherein a distance between two end faces of the first insulating film (12) is s, a width of the cell body (11) is t, and 0<s≤2t/3.

10. The battery according to claim 7, wherein the second insulating film (13) covers all of the other one of the second side surfaces (112).

11. The battery according to claim 2, wherein the two tabs (14) respectively extend from the two first side surfaces (111), and the first insulating film (12) partially covers the two first side surfaces (111).

12. The battery according to claim 2, further comprising:
a bracket (30), disposed between the first side surfaces (111) and the casing (20),
wherein the first insulating film (12) and/or the second insulating film (13) has a part partially covering the bracket (30).

13. The battery according to any one of claims 2-12, wherein the two second side surfaces (112) are surfaces of the cell body (11) having a largest area.

14. The battery according to any one of claims 1-12, wherein a length of the battery is a, a width of the battery is b, and a height of the battery is c; and 2b≤a≤50b and/or 0.5c≤ b≤20c; 400mm≤a≤2500mm.

15. A battery module, comprising the battery according to any one of claims 1-14.

16. A battery pack, comprising the battery according to any one of claims 1-14.
